Europäisches Patentamt

European Patent Office

Office européen des brevets

(11) Publication number: **0 495 992 A1**

# EUROPEAN PATENT APPLICATION
## published in accordance with Art. 158(3) EPC

(21) Application number: **91913676.2**

(22) Date of filing: **31.07.91**

(86) International application number:
**PCT/JP91/01025**

(87) International publication number:
**WO 92/02868 (20.02.92 92/05)**

(51) Int. Cl.5: **G05B 19/05**

(30) Priority: **09.08.90 JP 210988/90**

(43) Date of publication of application:
**29.07.92 Bulletin 92/31**

(84) Designated Contracting States:
**CH DE IT LI**

(71) Applicant: **FANUC LTD.**
**3580, Shibokusa Aza-Komanba, Oshino-mura**
**Minamitsuru-gun, Yamanashi 401-05(JP)**

(72) Inventor: **TANAKA, Kunio**
**5-8-13, Tamagawa-cho**
**Akishima-shi, Tokyo 196(JP)**

Inventor: **MATSUI, Yoshiro, Fanuc Dai-3**
**Vira-karamatsu**
**3527-1, Shibokusa, Oshino-mura**
**Minamitsuru-gun, Yamanashi 401-05(JP)**
Inventor: **SAMUKAWA, Koji, Fanuc Dai-3**
**Vira-karamatsu**
**3527-1, Shibokusa, Oshino-mura**
**Minamitsuru-gun, Yamanashi 401-05(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

(54) **METHOD OF EDITING LADDER PROGRAM.**

(57) In editing a ladder program used for a programmable controller on a display screen, an insertion mark is put to a temporary net (S1 to S4) that has been newly prepared by an operator, and a deletion mark is put to a net (S5 to S7) to be deleted. After the temporary editing of the ladder program for putting an insertion mark and a deletion mark is finished, it is automatically discriminated whether the insertion mark or the deletion mark is put to each of the nets (S11, S15), and a message is displayed on the screen (S12, S16) inquiring if marked nets are to be inserted or deleted. The insertion mark is removed from the ladder program (S13) if the temporary net should be inserted, the insertion mark and the temporary net are removed (S14) if the net should not be inserted, the deletion mark and the temporary net are removed (S17) if the net should be deleted, and the deletion mark is removed (S18) if the net should not be deleted. Thus, the ladder program is edited quickly and correctly.

FIG.4

```
        ┌─────────┐
        │  START  │
        └─────────┘
             │
S1 ─── ◇ SHOULD THE NET ◇ ── NO ──┐
       │   BE INSERTED?  │         │
             │ YES                 │
S2 ─── ┌──────────────┐            │
       │ SWITCH OVER TO THE │      │
       │ NET PREPARATION    │      │
       │ SCREEN             │      │
       └──────────────┘            │
             │                     │
S3 ─── ┌──────────────┐            │
       │ PREPARE INSERTION │       │
       │ NET USING SYMBOL  │       │
       │ KEYS              │       │
       └──────────────┘            │
             │                     │
S4 ─── ┌──────────────┐            │
       │ PUT AN INSERTION │        │
       │ MARK             │        │
       └──────────────┘            │
             │ ◄───────────────────┘
S5 ─── ◇ IS IT A ◇ ── NO ──┐
       │ DELETION NET? │    │
             │ YES          │
S6 ─── ┌──────────────┐     │
       │ PUT A         │    │
       │ DELETION MARK │    │
       └──────────────┘     │
             │ ◄────────────┘
S7 ─── ◇ ARE THE INSERTION AND ◇
  NO ──│ DELETION COMPLETED? │
             │ YES
        ┌─────────┐
        │  E N D  │
        └─────────┘
```

FIG.5

```
        ┌─────────┐
        │  START  │
        └─────────┘
             │
S11 ── ◇ IS THE INSERTION ◇ ── NO ──────────┐
       │ MARK PUT TO THE  │                  │
       │ NET?             │                  │
             │ YES                           │
S12 ── ◇ SHOULD THE NET BE ◇ ── NO ──┐       │
       │ INSERTED?       │           │       │
             │ YES                   │  S14  │
S13 ── ┌──────────────┐    ┌──────────────┐  │
       │ REMOVE THE    │   │ DELETE THE    │ │
       │ INSERTION MARK│   │ INSERTION MARK AND │
       │ FROM THE NET  │   │ THE INSERTION NET │
       └──────────────┘    └──────────────┘  │
             │ ◄──────────────────┘ ◄─────────┘
S15 ── ◇ IS THE DELETION ◇ ── NO ───────────┐
       │ MARK PUT TO THE │                   │
       │ NET?            │                    │
             │ YES                            │
S16 ── ◇ SHOULD THE NET ◇ ── NO ──┐          │
       │ BE DELETED?    │         │  S18     │
             │ YES                │          │
S17 ── ┌──────────────┐  ┌──────────────┐    │
       │ DELETE THE    │ │ REMOVE THE DELETION │
       │ DELETION MARK AND │ MARK OF NET │     │
       │ THE DELETION NET │ └──────────────┘   │
       └──────────────┘      │                 │
             │ ◄─────────────┘ ◄───────────────┘
S19 ── ◇ IS THE CHECKING ◇
  NO ──│ OF NET MARK     │
       │ COMPLETED?      │
             │ YES
S20 ── ┌──────────────┐
       │ STORE THE     │
       │ LADDER PROGRAM│
       └──────────────┘
             │
        ┌─────────┐
        │  E N D  │
        └─────────┘
```

2

Technical Field

This invention relates to a ladder program editing method, and more particularly, to an editing method which permits a fast and accurate editing of a ladder program used for controlling a programmable controller.

Background Art

A programmable controller includes an input section to which input signals from, e.g., external limit switches and push buttons, are input, and a memory for storing a sequence in program form. Typically, the sequence is described in ladder diagram representation (relay logic format) composed of a series of logical lines (nets). A logical operation unit of the programmable controller decodes the sequence, using the input signals as required, and outputs the result of the decoded sequence to external electromagnetic switches, electromagnetic valves, and the like through an output section.

When creating a sequence program in a ladder diagram format, in general, the operator successively operates various symbol keys on a programming system whereby the sequence is displayed on a display screen of the programming system in the form of ladder diagram. The sequence prepared in the ladder diagram format (ladder program) is stored in the memory of the programming system, and is modified or edited afterward when required.

When the ladder program is being edited, a newly prepared net is provisionally inserted at a suitable portion of the ladder program displayed on the display screen, and a jump command is provisionally inserted before an unnecessary net in the ladder program to provisionally delete the unnecessary net. The operator thereafter checks if the settings of the provisional insertion nets and provisional deletion nets are proper. If a provisional insertion net has been set improperly, it is deleted, and if a provisional deletion net has been set improperly, the corresponding jump command is deleted to thereby restore the provisionally deleted net. If the remaining provisional insertion and deletion nets are adequate, they are set conclusively.

In the conventional ladder program editing method described above, however, a determination as to which of the jump commands and which of the nets in the ladder program have been inserted during the editing must be made based solely on the operator's memory, memorandum, and the like. Therefore, difficulty arises in ascertaining the insertion and deletion nets contained in the ladder program and thus in editing the ladder program.

Disclosure of the Invention

An object of this invention is to provide a ladder program editing method which permits fast and accurate insertion and deletion of nets into and from a ladder program used for a programmable controller.

To achieve the above object, a ladder program editing method according to this invention comprises a step of displaying a net provisionally inserted into a ladder program, which is used for a programmable controller and composed of a series of nets, together with an insert mark affixed to the provisionally inserted net, while the ladder program is being edited on a display screen; and a step of displaying a net provisionally deleted from the ladder program, together with a delete mark affixed thereto, while the ladder program is being edited.

Preferably, the insert mark is automatically removed from the ladder program then the provisionally inserted net is set conclusively as an insertion net, and the delete mark and the provisionally deleted net are automatically removed from the ladder program when the provisionally deleted net is set conclusively as a deletion net. Further, the provisionally inserted net and the insert mark are automatically removed from the ladder program when the provisionally inserted net is prohibited from being set conclusively, and the delete mark is automatically removed from the ladder program when the provisionally deleted net is prohibited from being set conclusively.

As described above, according to this invention, nets provisionally inserted into and those provisionally deleted from a ladder program being edited are shown, respectively, with the insert and delete marks affixed thereto, and accordingly, the insertion nets and deletion nets in the ladder program can be easily discriminated, and thus insertion and deletion of nets into and from the ladder program, i.e., editing of the ladder program, can be quickly and accurately carried out. Preferably, the insert mark is automatically removed when the insertion net is set conclusively, and the delete mark and the provisional deletion net are automatically removed when the deletion net is set conclusively. Further, the insertion net and the insert mark are automatically removed when the insertion net is prohibited from being set conclusively, and the delete mark is automatically removed when the deletion net is prohibited from being set conclusively. Therefore, the ladder program can be quickly and accurately edited.

Brief Description of the Drawings

FIG. 1 is a diagram showing an example of what is displayed on a ladder program editing screen, in a ladder program editing method according to an embodiment of this invention;

FIG. 2 is a diagram showing an example of how an insertion net is created on the ladder program editing screen;

FIG. 3 is a block diagram showing a programming system for carrying out the ladder program editing method according to the embodiment of this invention;

FIG. 4 is a flowchart showing a procedure for provisionally setting an insertion net and deletion net; and

FIG. 5 is a flowchart showing a procedure for editing a ladder program after the provisional setting of insertion and deletion nets.

Best Mode of Carrying Out of the Invention

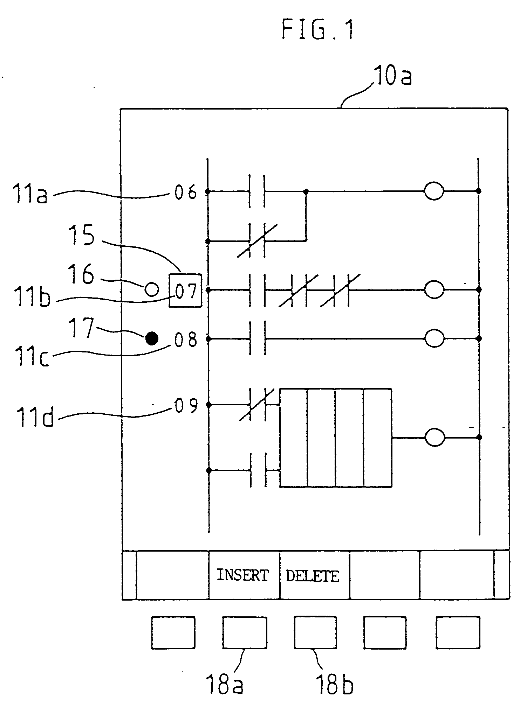

According to an embodiment of this invention, a ladder program, which is used for a programmable controller and composed of a series of nets (logical lines) individually created in a relay logic format, is edited by use of a programming system. Namely, when the programming system is set in an edition mode through a depression of a corresponding one of multifunction keys provided below a display screen of the programming system, a ladder program editing screen 10a (FIG. 1) is shown on the display screen. The ladder program can be scrolled in vertical directions on the editing screen 10a, and a required portion of the program is displayed on the screen. Net numbers representing the individual nets are shown on the left of the respective nets. Further, the second and third multifunction keys 18a and 18b from the left are assigned to an "INSERT KEY" function and a "DELETE KEY" function, respectively. Accordingly, labels "INSERT" and "DELETE" representing these assigned functions are shown, respectively, in the second and third segments from the left of a function display area located at the bottom of the display screen.

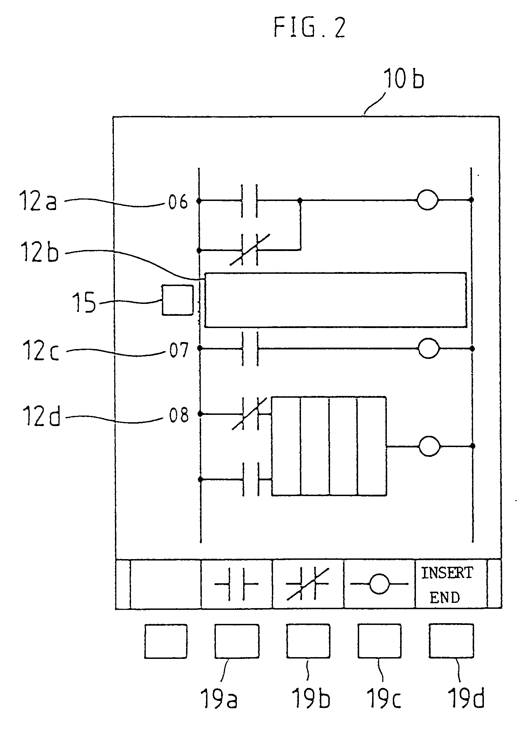

The operator then checks the contents of the displayed ladder program, and determines whether or not a new net must be inserted into the ladder program. If the insertion of a new net is required, a cursor 15 (FIGS. 1 and 2) is moved to a net number at which the new net is to be inserted, and then the insert key 18a is depressed. For example, if the cursor 15 is moved to the net number "07" and the insert key 18a is depressed, the ladder program editing screen 10a of FIG. 1 is changed to an insertion net creating screen 10b shown in FIG. 2. On the screen 10b, the sixth to eighth nets are displayed together with the net numbers "06" to "08" indicated by 12a, 12c and 12d, respectively, and a space 12b appears between the sixth and seventh nets. The second to fifth multifunction keys 19a to 19d from the left are assigned an "a-CONTACT RELAY SYMBOL KEY" function, a "b-CONTACT RELAY SYMBOL KEY" function, a "COIL SYMBOL KEY" function, and an "INSERTION END KEY" function, respectively, and symbols " ┤├ ", " ┤╱├ " and " ◯ " and a label "INSERTION END" are displayed respectively in the second to fifth segments from the left of the function display area.

The operator then creates a new net in the relay logic format in the space 12b, using required ones of the symbol keys 19a to 19c. When the operator thereafter depresses the insertion end key 19d, the insertion net creating screen 10b is switched to the ladder program editing screen 10a. The sixth net is displayed at the top of the editing screen 10a, and the newly inserted net is shown below the sixth net provisionally as a new seventh net. Further, an insert mark 16 or hollow circle "◯" indicating that the new seventh net is a provisionally inserted net is displayed on the left of the net number "07" corresponding to the new seventh net (provisionally inserted net) and indicated by reference numeral 11b.

Subsequently, the operator checks the contents of the ladder program displayed on the editing screen 10a, and determines whether or not any net must be deleted from the ladder program. If a net (e.g., the new eighth net corresponding to the original seventh net) must be deleted, the cursor 15 is moved to the net number representing the net to be deleted (e.g., the corresponding net number "08" indicated by reference numeral 11c), and the delete key 18b is depressed. Upon operation of the delete key, a delete mark 17 or dark circle "●" indicating that the new eighth net is a provisional deletion net is displayed on the left of the net number "08" corresponding to the new eighth net (provisional deletion net) and indicated by reference numeral 11c. The new ninth net corresponding to the original eighth net is displayed below the new eighth net.

Insertion and deletion of nets are carried out as required for other parts of the ladder program, with the program scrolled on the editing screen 10a.

The operator checks thereafter if the settings of the provisional insertion nets and provisional deletion nets are adequate, referring to the provisionally edited ladder program displayed on the editing screen 10a together with the insert and delete marks. If the setting of a provisional insertion net is proper, the cursor 15 is moved to the insert mark 16 corresponding to this proper insertion net, and the insert key 18a is depressed. In response to the operation of the insert key, the programming system removes the insert mark 16 affixed to this provisional insertion net, and inserts the provisional insertion net conclusively into the ladder program. If the setting of a provisional insertion net is improper, the cursor 15 is moved to the insert mark 16 affixed to this improper insertion net, and the delete key 18b is depressed. In response to the operation of the delete key, the programming system removes the insert mark 16 and the corresponding provisionally inserted net, to thereby prohibit the insertion of the provisionally inserted net into the ladder program, and renumbers the net numbers of the nets following this insertion net.

If the setting of a provisional deletion net is proper, the cursor 15 is moved to the delete mark 17 affixed to this proper deletion net, and the delete key 18b is depressed. When the delete key is operated, the programming system removes the provisional deletion net and the delete mark 17, to thereby delete the net from the ladder program. If, on the other hand, the setting of a provisional deletion net is improper, the cursor 15 is moved to the delete mark 17 affixed to this improper deletion net, and the delete key 18b is depressed. In response to the operation of the delete key, the programming system removes the delete mark, and prohibits the provisional deletion net from being deleted from the ladder program.

After the above-mentioned process is carried out for all of the provisional insertion and deletion nets and the editing of the ladder program is completed, the edited ladder program is stored in the memory. The edited ladder program is then transferred to the programmable controller.

A programming system for carrying out the aforementioned ladder program editing method will be described.

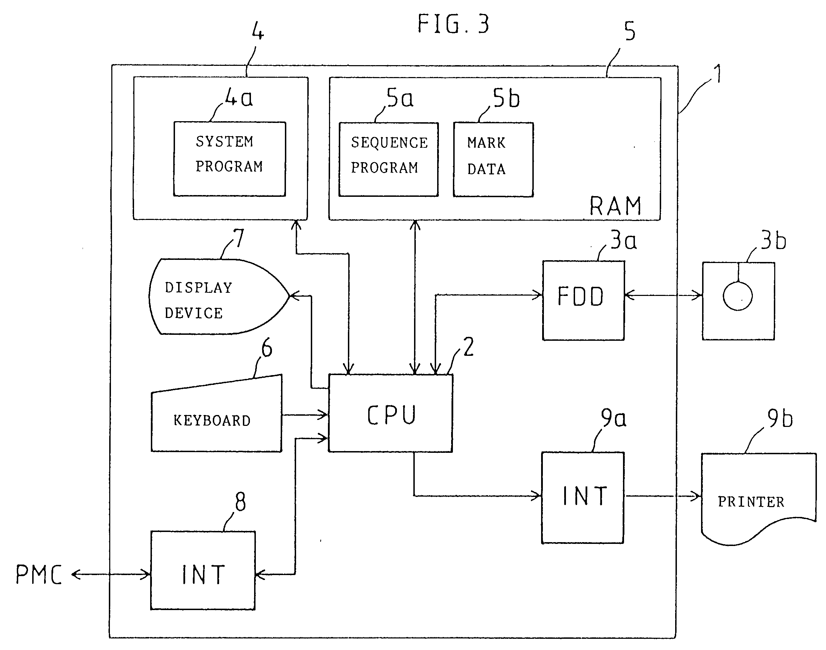

Referring to FIG. 3, a programming system 1 includes a processor (CPU) 2, which is connected to a disk controller 3a in which a floppy disk 3b is set, a memory 4 for storing a system program, a random-access memory (RAM) 5, a keyboard 6, and a display device 7. The RAM 5 is loaded with a sequence program (ladder program) 5a created in the ladder format by the operator by use of the keyboard 6, and mark data 5b including the insert marks, delete marks and net numbers. The display device 7 includes a display screen (not shown) for displaying the editing screen 10a (FIG. 1), insertion net creating screen 10b (FIG. 2), and question messages, described later, and software keys (not shown) serving as the multifunction keys (FIGS. 1 and 2).

The CPU 2 is connected via an interface 8 to a programmable machine controller (PMC), which is incorporated in a numerical control device, not shown, and functions as the programmable controller, and is also connected via an interface 9a to a printer 9b. The sequence program stored in the RAM 5 is transferred to the PMC, or, when required, printed by the printer 9b or stored in the floppy disk 3b, under the control of the CPU 2.

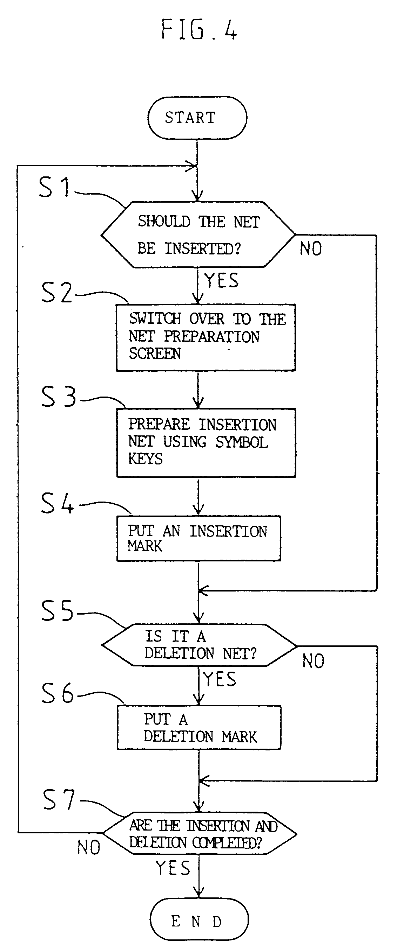

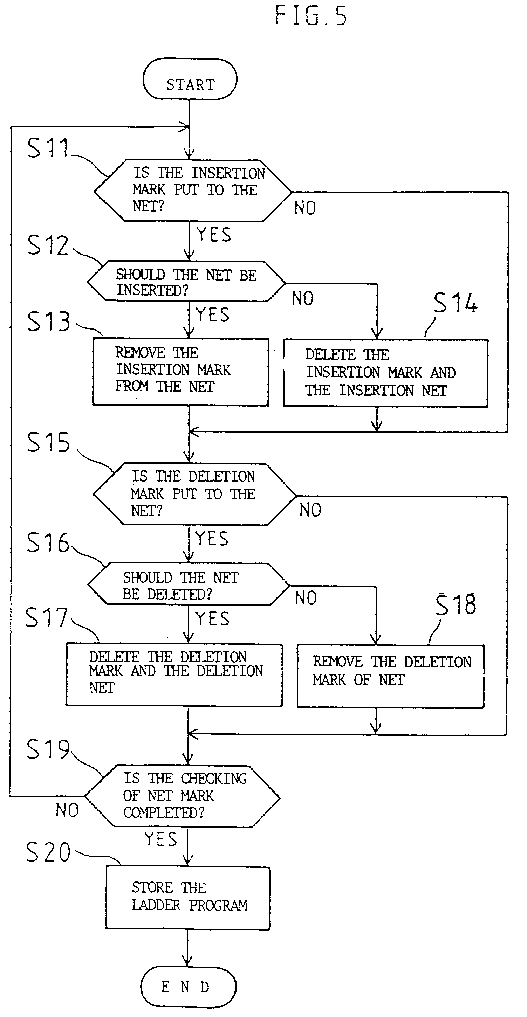

The operation of the programming system shown in FIG. 3 will be described with reference to FIGS. 4 and 5.

When the programming system is set in the edition mode by the operator, the ladder program editing screen 10a shown in FIG. 1 is displayed at the display device 7 which is controlled by the CPU 2, and a first question asking whether an insertion net needs to be created, e.g., "CREATE INSERTION NET?", is displayed at the top of the editing screen 10a (Step S1 in FIG. 4). If the operator depresses the insert key 18a after moving the cursor 15 to a net number at which a net is to be inserted, the editing screen 10a is changed to the insertion net creating screen 10b shown in FIG. 2 (Step S2). The operator then creates a new net (Step S3) by operating one or more of the symbol keys 19a to 19c (FIG. 2). When the operator thereafter depresses the insertion end key 19d in FIG. 2, the new net is displayed, together with the insert mark 16 (FIG. 1), on the editing screen 10a switched from the screen 10b (Step S4).

When the execution of Step S4 for displaying the insert mark is completed, or if the result of the determination in Step S1 is NO because of, for example, a key-in operation such that the creation of an insertion net is unnecessary, in response to the first question, a second question asking whether a deletion net is to be set, e.g., "SET DELETION NET?", is displayed on the editing screen 10a (Step S5). In response to the second message, the operator may set the cursor 15 at the net number of a net to be deleted and then depress the delete key 18b, whereupon the delete mark 17 is affixed to the corresponding net (Step S6).

When the execution of Step S6 for displaying the delete mark is completed, or if the result of the determination in Step S5 is NO because of, for example, a key-in operation such that the setting of a deletion net is unnecessary, in response to the second question, a third question asking whether the provisional setting of insertion and deletion nets is completed, e.g., "INSERTION & DELETION COMPLETED?", is displayed on the editing screen 10a (Step S7). If, in response to the third message, the operator keys in such that the provisional setting of insertion and deletion nets is to be continued, the program proceeds to Step S1 whereby the first message is again displayed. If, after the process of FIG. 4 is repeated as required, the operator keys in such that the provisional setting of insertion and deletion nets is completed, the process of FIG. 4 is ended and a process shown in FIG. 5 is started.

In the process shown in FIG. 5, the CPU 2 determines whether or not an insert mark is affixed to the first net of the provisionally edited ladder program in which the insertion and deletion nets have been provisionally set (Step S11). If an insert mark is affixed to the first net, a fourth question asking whether the net concerned should be inserted into the ladder program, e.g., "INSERT NET?", is displayed on the display screen (Step S12). If, in reply to the fourth question, the operator keys in a command to allow the insertion of the net, the CPU 2 removes the insert mark affixed to the first net and inserts this provisional insertion net conclusively into the ladder program (Step S13). If, on the other hand, a command to prevent the insertion of the net is inputted by key-in operation in response to the fourth message, the CPU 2 removes the first insertion net and the insert mark affixed thereto, to prohibit the provisional insertion net from being inserted into the ladder program, and renumbers the second and subsequent nets (Step S14).

If it is determined in Step S1 that no insert mark is affixed to the first net, the CPU 2 determines whether or not a delete mark is affixed to the first net (Step S15). If a delete mark is affixed to the first net, a fifth question asking whether the net concerned should be deleted from the ladder program, e.g., "DELETE NET?", is displayed on the display screen (Step S16). If, in reply to the fifth question, the operator keys in a command to allow the deletion of the net, the CPU 2 removes the first net and the delete mark affixed thereto, to thereby delete this provisional deletion net conclusively from the ladder program (Step S17). If, on the other hand, a command to prevent the deletion of the net is inputted by key-in operation in response to the fifth message, the CPU 2 removes the delete mark affixed to the first net, to prohibit the provisional deletion net from being deleted from the ladder program (Step S18).

Next, the CPU 2 determines whether or not a subsequent net exists (Step S19), and if a subsequent net exits, the program proceeds to the aforementioned Step S1. Thereafter, as in the case of the first net, corresponding ones of the aforesaid Steps S1 to S19 are sequentially executed with respect to the second net and those subsequent thereto, and the provisionally edited ladder program is edited in final form by the process of FIG. 4. When it is determined that no subsequent net exists, in Step 19 executed with respect to the last net, the CPU 2 stores the edited ladder program in the RAM 5, and ends the process of FIG. 5.

**Claims**

1. A ladder program editing method comprising the steps of:

    (a) displaying a net provisionally inserted into a ladder program, which is used for a programmable controller and composed of a series of nets, together with an insert mark affixed to the provisionally inserted net, while the ladder program is being edited on a display screen; and

    (b) displaying a net provisionally deleted from the ladder program, together with a delete mark affixed thereto, while the ladder program is being edited.

2. A ladder program editing method according to claim 1, which further comprises the steps of:

    (c) automatically removing the insert mark from the ladder program when said provisionally inserted net is set conclusively as an insertion net;

    (d) automatically removing said delete mark and said provisionally deleted net from said ladder program when said provisionally deleted net is set conclusively as a deletion net;

    (e) automatically removing said provisionally inserted net and said insert mark from said ladder program when said provisionally inserted net is prohibited from being set conclusively; and

    (f) automatically removing said delete mark from said ladder program when said provisionally deleted net is prohibited from being set conclusively.

3. A ladder program editing method according to claim 2, wherein a question asking whether each of said provisionally inserted nets and provisionally deleted nets is to be set conclusively as a corresponding one of the insertion net and deletion net is displayed on the display screen.

FIG.1

FIG. 2

FIG.3

EP 0 495 992 A1

# FIG.4

START

S1 — SHOULD THE NET BE INSERTED? — NO

YES

S2 — SWITCH OVER TO THE NET PREPARATION SCREEN

S3 — PREPARE INSERTION NET USING SYMBOL KEYS

S4 — PUT AN INSERTION MARK

S5 — IS IT A DELETION NET? — NO

YES

S6 — PUT A DELETION MARK

S7 — ARE THE INSERTION AND DELETION COMPLETED? — NO

YES

E N D

FIG.5

```
                    ( START )
                        |
         S11 __         |
                \       v
             < IS THE INSERTION
               MARK PUT TO THE  >---- NO ----
                 NET?                        |
                     | YES                   |
         S12 __      |                       |
                \    v                       |
             < SHOULD THE NET BE >--- NO --  |
               INSERTED?               |     |
                  | YES                |     |
         S13 __   |          S14       |     |
               \  v             \      v     |
          +------------------+  +------------------+
          | REMOVE THE       |  | DELETE THE       |
          | INSERTION MARK   |  | INSERTION MARK AND|
          | FROM THE NET     |  | THE INSERTION NET |
          +------------------+  +------------------+
                     |                 |          |
                     v<----------------+          |
         S15 __                                   |
               \                                  |
             < IS THE DELETION                    |
               MARK PUT TO THE  >---- NO ---------|
                 NET?                             |
                     | YES                        |
         S16 __      |                            |
               \     v                            |
             < SHOULD THE NET >--- NO ---         |
               BE DELETED?           |            |
                  | YES              |            |
         S17 __   |         S18      |            |
               \  v            \     v            |
          +------------------+  +------------------+
          | DELETE THE       |  | REMOVE THE       |
          | DELETION MARK AND|  | DELETION MARK    |
          | THE DELETION NET |  | OF NET           |
          +------------------+  +------------------+
                     |                 |           |
                     v<----------------+-----------+
         S19 __
               \
             < IS THE CHECKING
        NO ---<  OF NET MARK    >
           |     COMPLETED?
           |         | YES
           |  S20 __ |
           |       \ v
           |  +------------------+
           |  | STORE THE        |
           |  | LADDER PROGRAM   |
           |  +------------------+
           |         |
           |         v
           |      ( END )
```

# INTERNATIONAL SEARCH REPORT

International Application No PCT/JP91/01025

| **I. CLASSIFICATION OF SUBJECT MATTER** (if several classification symbols apply, indicate all) [6] |
|---|
| According to International Patent Classification (IPC) or to both National Classification and IPC |
| Int. Cl$^5$ G05B19/05 |

**II. FIELDS SEARCHED**

| Minimum Documentation Searched [7] | |
|---|---|
| Classification System | Classification Symbols |
| IPC | G05B19/05 |

| Documentation Searched other than Minimum Documentation to the Extent that such Documents are included in the Fields Searched [8] |
|---|
| Jitsuyo Shinan Koho      1932 – 1991<br>Kokai Jitsuyo Shinan Koho      1971 – 1991 |

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| A | JP, A, 02-90202 (Mitsubishi Electric Corp.), March 29, 1990 (29. 03. 90), (Family: none) | 1-3 |
| A | JP, A, 62-15605 (Fuji Electric Co., Ltd.), January 24, 1987 (24. 01. 87), (Family: none) | 1-3 |
| A | JP, B2, 63-65966 (Toshiba Machine Co., Ltd.), December 19, 1988 (19. 12. 88), (Family: none) | 1-3 |
| P | JP, A, 03-147106 (Fanuc Ltd.), June 24, 1991 (24. 06. 91), (Family: none) | 1-3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| October 22, 1991 (22. 10. 91) | November 5, 1991 (05. 11. 91) |
| International Searching Authority | Signature of Authorized Officer |
| Japanese Patent Office | |

Form PCT/ISA/210 (second sheet) (January 1985)